## Europäisches Patentamt
## European Patent Office
## Office européen des brevets

(19)

(11) Numéro de publication: **0 252 789**
**B1**

(12) **FASCICULE DE BREVET EUROPEEN**

(51) Int. Cl.⁴: **B60T 8/44**, B60T 8/50

(45) Date de publication du fascicule du brevet:
03.01.90

(21) Numéro de dépôt: **87401372.5**

(22) Date de dépôt: **18.06.87**

(54) **Dispositif de mémorisation de pression pour un circuit hydraulique.**

(30) Priorité: **09.07.86 FR 8610005**

(43) Date de publication de la demande:
**13.01.88 Bulletin 88/2**

(45) Mention de la délivrance du brevet:
**03.01.90 Bulletin 90/1**

(84) Etats contractants désignés:
**DE ES GB IT**

(56) Documents cités:
**EP-A- 0 065 451**
**DE-A- 2 106 337**
**DE-A- 2 557 347**
**GB-A- 2 130 668**

(73) Titulaire: **BENDIX France Société Anonyme dite:,
126, rue de Stalingrad, F-93700 Drancy(FR)**

(72) Inventeur: **Kervagoret, Gilbert, 5, Impasse Nobleterre,
F-95100 Argenteuil(FR)**

(74) Mandataire: **Lejet, Christian et al, BENDIX FRANCE
Division Technique Service Brevets Bendix
Europe 126 rue de Stalingrad, F-93700 Drancy(FR)**

ACTORUM AG

## Description

La présente invention se rapporte à un dispositif de mémorisation de pression pour un circuit hydraulique, et, plus particulièrement à un tel dispositif pour un circuit de freinage de véhicule.

Dans un circuit de freinage de véhicule équipé d'un système de régulation de freinage, la consommation de fluide hydraulique, lors du fonctionnement du système de régulation de freinage, est parfois excessive.

L'invention a donc pour objet de proposer un dispositif de mémorisation de pression pour un circuit hydraulique qui soit de construction simple et qui puisse réduire la consommation de fluide hydraulique.

Le document EP-A 0 065 451 décrit en relation avec sa Figure 2 un modulateur de freinage comportant un dispositif de copiage de pression piloté par le maître-cylindre permettant d'éviter une variation importante du volume d'huile contenu dans le maître-cylindre. Ce dispositif de copiage est sensiblement conforme au dispositif de mémorisation de pression tel que décrit dans le préambule de la première revendication et comprenant une source de fluide sous pression, un dispositif d'assistance hydraulique destiné à être actionné sélectivement pour envoyer du fluide de la source, par un premier circuit hydraulique, vers un récepteur hydraulique, un système de régulation de freinage, et un premier moyen de valve pouvant comprendre une électrovanne et destiné à interrompre le passage de fluide entre la source et le récepteur. Le dispositif de mémorisation de pression est disposé dans un deuxième circuit entre la source haute pression et le récepteur hydraulique et comprenant une première chambre délimitée par un premier piston et destinée à être mise en communication avec le dispositif d'assistance hydraulique, lors de sa mise en œuvre, et un deuxième moyen de valve dans le deuxième circuit destiné à être actionné par le premier piston entre une position fermant le deuxième circuit et une position ouvrant ce dernier en fonction de la pression dans la première chambre.

Selon la présente invention, la première chambre est délimitée par un deuxième piston qui est sollicité par un ressort dans une direction tendant à réduire le volume de la première chambre.

D'autres caractéristiques et avantages de la présente invention ressortiront des sous-revendications et de la description suivante de deux modes de réalisation donnés à titre illustratif, mais nullement limitatif, faite en relation avec les dessins annexés, sur lesquels:

– la Figure 1 est une vue schématique d'un premier circuit hydraulique comprenant un dispositif de mémorisation de pression selon l'invention ;
– la Figure 2 est une vue schématique d'un deuxième circuit hydraulique ; et
– la Figure 3 montre des courbes de pression/temps pour un circuit de freinage, où la ligne pleine représente la variation de la pression pour un circuit sans le dispositif de l'invention, et la courbe pointillée représente la variation de la pression pour circuit comprenant le dispositif de l'invention.

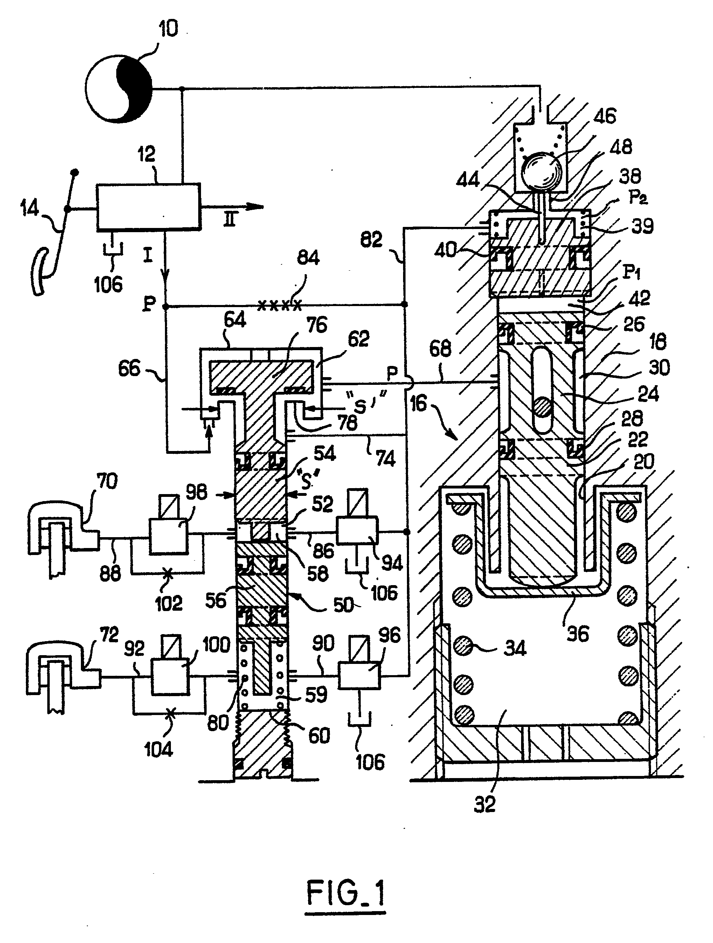

Comme représenté sur la figure 1, un circuit hydraulique, qui, dans l'exemple illustré, est un circuit de freinage de véhicule, comprend une source de fluide sous pression 10 et un dispositif d'assistance hydraulique, dit "booster" 12 susceptible d'être actionné par une pédale de freinage 14. Le dispositif d'assistance hydraulique 12 est relié à deux circuits de freinage, un circuit I des roues avant et un circuit II des roues arrières du véhicule.

Dans le circuit I des roues avant est disposé un dispositif de mémorisation de pression 16 qui comprend un corps 18 dans lequel est formé un alésage étagé 20. Dans l'alésage 20 est monté, à coulissement étanche, un premier piston 22 comprenant une partie 24 de diamètre réduit qui définit avec l'alésage étagé 20 et deux coupelles annulaires 26,28 une chambre annulaire 30. Le premier piston 22 fait saillie dans une chambre 32 et est sollicité vers le haut, en regardant les dessins, par un ressort 34 disposé dans la chambre 32 et qui prend appui contre une cage 36 reçue sur l'extrémité du piston 22.

Dans l'alésage étagé 20 est également monté, à coulissement étanche, un deuxième piston 38 comportant une coupelle annulaire 40 et définissant avec l'alésage 20 et le premier piston 22 une chambre 42 formant accumulateur dont la fonction sera décrite plus avant. Le deuxième piston 38 comporte une tige d'actionnement 44 destinée à soulever une bille 46 de son siège 48, lors d'un déplacement du deuxième piston 38, ouvrant ainsi un passage entre la source de fluide 10 et une chambre 39 dans l'alésage 20.

Le circuit de freinage comprend, également, un moyen de valve 50 qui comprend un alésage 52 dans lequel sont montés, à coulissement étanche, un premier et un deuxième pistons 54,56 qui définissent entre eux une première chambre 58. Une deuxième chambre 59 est définie entre le deuxième piston 56 et le fond 60 de l'alésage 52, et une troisième chambre 62 est formée entre le premier piston 54 et le haut 64 de l'alésage 52. La troisième chambre 62 est reliée au dispositif d'assistance hydraulique 12 par un conduit 66, à la chambre annulaire 30 par un conduit 68, et aux freins 70 et 72 du circuit I par un conduit 74. Le premier piston 54 comporte une tête élargie formant clapet 76 destinée à coopérer avec un siège 78 pour fermer sélectivement la communication entre les conduits 66 et 74. Le premier et le deuxième pistons 54,56 sont sollicités vers leurs positions de repos illustrées par un ressort 80 monté dans la deuxième chambre 59.

Le conduit 74 est relié à l'alésage 20 du dispositif de mémorisation de pression par un conduit 82. Une restriction 84 est disposée en parallèle avec les conduits 66 et 74. Le conduit 74 est relié aux freins 70 et 72 par des conduits 86,88 et 90,92 respectivement. Dans chacun des conduits 86 et 90 est montée une électrovanne d'isolement/détente 94,96, et dans chacun des conduits 88 et 92 est montée une électrovanne d'isolement 98,100. Une restriction 102,104 est disposée en parallèle avec chaque électrovanne d'isolement 98,100.

Le fonctionnement du dispositif ainsi décrit est le suivant.

Lors d'une mise en oeuvre du dispositif d'assistance hydraulique 12, le fluide sous pression passe de la source 10, par les conduits 66,74,86 et 90, et 88,92, vers les freins avant 70 et 72 du véhicule. Le fluide sous pression passe également par le conduit 82 et par-dessus la coupelle annulaire 40 pour remplir la chambre formant accumulateur 42. Si, lors d'un freinage du véhicule, les roues avant se mettent à déraper, le circuit électronique d'un système de régulation de freinage, dit "anti-blocage" (non représenté) provoque la fermeture des électrovannes 94 et 96, soit simultanément, soit avec un léger décalage, mettant la première et la seconde chambres 58,59 en communication avec un réservoir basse pression 106. La pression dans les freins avant, et dans les chambres 58 et 59, chute mais la pression précédente P règne toujours dans la troisième chambre 62. Quand cette dernière pression est suffisante pour vaincre la pression dans les chambres 58 et 59 et l'action du ressort 80, le clapet 76 se ferme sur son siège 78, la fermeture étant confirmée par l'action de la pression dans la troisième chambre qui agit sur une section S' qui est supérieure à la section S de l'alésage 52. Le dispositif d'assistance hydraulique 12 se trouve ainsi isolé des freins avant 70,72.

La pression hydraulique P1 dans l'accumulateur 42 est sensiblement identique à la pression P au moment où le clapet 76 s'est fermé. Etant donné que la pédale 14 est toujours enfoncée, la pression dans la troisième chambre 62 et, donc celle dans la chambre annulaire 30 a augmenté et est supérieure à P1. La coupelle annulaire 26 est ainsi maintenue en position d'étanchéité isolant le dispositif d'assistance hydraulique 12 de l'accumulateur 42. La pression P1 dans l'accumulateur 42 provoque le déplacement du deuxième piston 38, qui, par l'intermédiaire de la tige d'actionnement 44, soulève progressivement la bille 46 de son siège 48, permettant au fluide sous pression de passer vers la chambre 39, jusqu'à une pression légèrement inférieure à P1.

Quand le circuit électronique du système d'antiblocage détermine que les roues avant se sont remises à tourner, les électrovannes 94 et 96 s'ouvrent permettant au fluide sous pression de passer de la chambre 39 par le conduit 82 vers les freins avant 70 et 72. La modulation de l'ouverture de la bille 46 a pour effet que la pression P2 dans la chambre 39 et, ainsi, dans les freins 70,72, est légèrement inférieure à P1. La création de la pression P2 est faite d'une manière autonome et sa valeur est déterminée en fonction de la pression P régnant dans le dispositif au moment de la fermeture du clapet.

La pression du fluide fournie aux freins avant 70,72 après la première mise en oeuvre du système d'antiblocage ne dépasse donc pas une limite déterminée par l'état du sol, c'est-à-dire la pression nécessaire pour faire déraper les roues avant. La consommation du fluide est donc diminuée par rapport à celle dans les circuits existants.

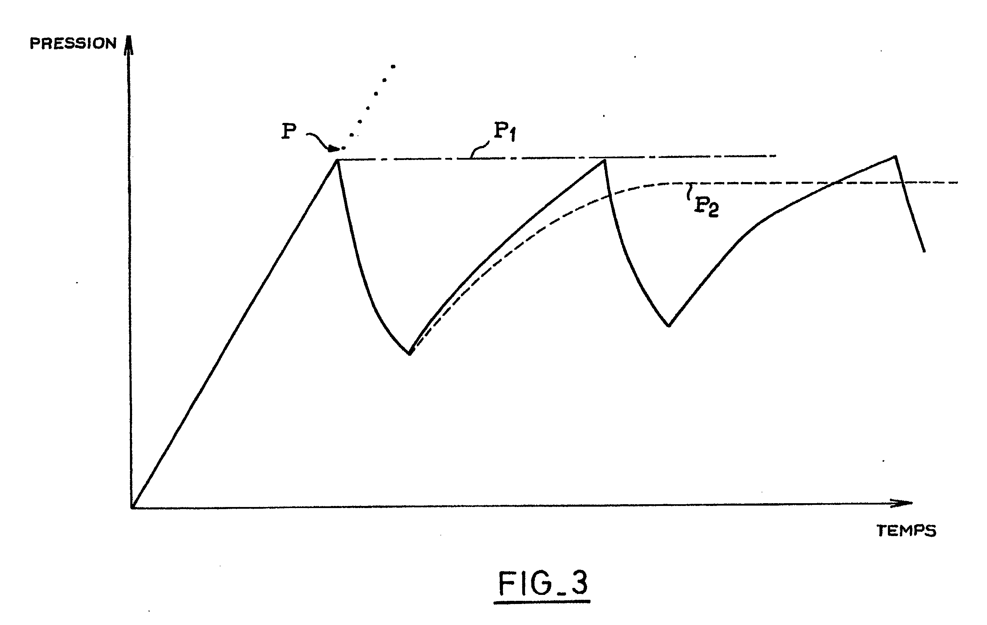

Comme on le voit sur la Figure 3, les freins sont, de ce fait, soumis à une pression constante P2 qui est inférieure la pression P1 qui déclencherait l'actionnement des électrovannes d'isolement/détente 94 et 96. Il n'y a donc pas d'écoulement de fluide vers le réservoir 106 pendant ce temps, tant que l'action de la restriction 84 ne s'est pas encore fait sentir.

Lors d'un défreinage, le fluide sous pression dans l'accumulateur 42 retourne vers le dispositif d'assistance hydraulique 12 en passant par-dessus la coupelle annulaire 26 et par la troisième chambre 62.

La restriction 84 est recommandée au cas où, lors d'un freinage, le véhicule passe subitement d'un sol à basse adhérence à un sol à haute adhérence, la restriction permettant d'augmenter progressivement la pression de freinage même si le clapet 76 est fermé.

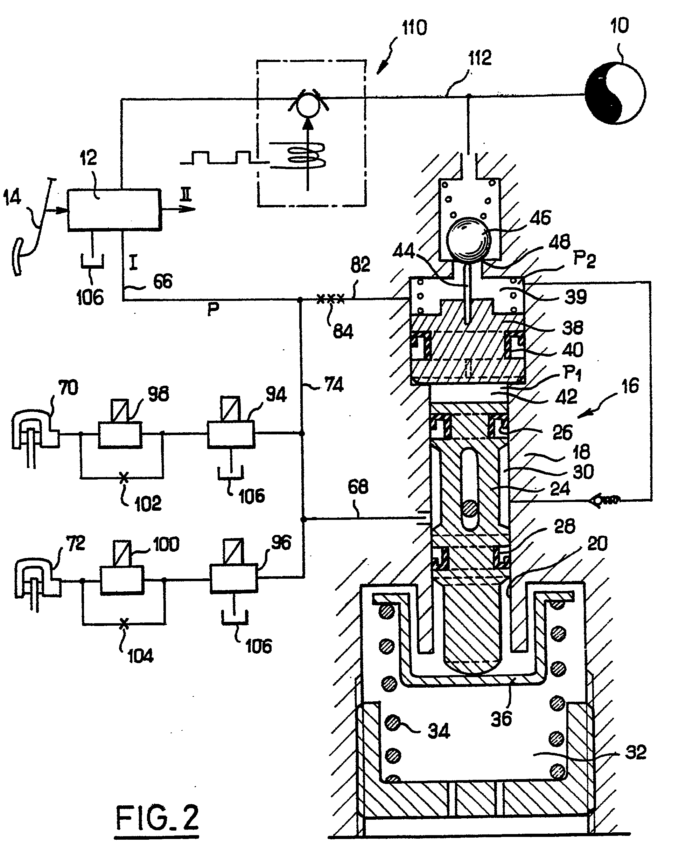

Le dispositif représenté sur la figure 2 diffère de celui de la figure 1 en ce que le moyen de valve 50 a été remplacé par une électrovanne 110. L'électrovanne 110 est située dans un conduit 112 entre le dispositif d'assistance hydraulique 12 et la source haute pression 10 et est destinée à être mise en marche par le circuit électronique du système d'antiblocage. Dans sa position excitée, l'électrovanne 110 ferme le passage de fluide entre la source haute pression 10 et le dispositif d'assistance hydraulique 12. Le fonctionnement du dispositif représenté sur la figure 2 est sensiblement analogue à celui du dispositif de la figure 1. Cependant, avec le dispositif de la figure 2, il est envisagé, lors du fonctionnement du dispositif, que le circuit électronique commande l'ouverture de l'électrovanne 110 pendant un instant très bref si les roues du véhicule tournent trop vite, trop longtemps, ce qui est un signe d'insuffisance de pression de freinage. L'ouverture de l'électrovanne 110 crée ainsi une pression de freinage instantanée qui est supérieure à celle régnant dans le circuit, ce qui permet d'augmenter progressivement la pression P1 lors d'un passage d'un sol à basse adhérence à un sol à haute adhérence.

Ainsi on peut constater qu'avec la présente invention il est possible de limiter la pression de freinage, pendant le fonctionnement du système d'antiblocage, à une limite correspondant à la pression initiale d'un cycle. Une réduction de la consommation de fluide est donc assurée.

**Revendications**

1. Dispositif de mémorisation de pression (16) pour un circuit hydraulique comprenant une source de fluide sous pression (10), un dispositif d'assistance hydraulique (12) destiné à être actionné sélectivement pour envoyer du fluide de la source (10), par un premier circuit hydraulique (66, 74), vers un récepteur hydraulique (70, 72), un système de régulation de freinage, et un premier moyen de valve (50, 110) pouvant comprendre une électrovanne et destiné à interrompre le passage de fluide entre la source (10) et le récepteur (70, 72), le dispositif de mémorisation de pression (16) étant disposé dans un deuxième circuit (82) entre la source haute pression (10) et le récepteur hydraulique (70, 72) et comprenant une première chambre (42) délimitée par un premier piston (38) et destinée à être mise en communication avec le dispositif d'assistance hydraulique (12), lors de sa mise en œuvre, et un deuxième moyen de valve (46, 48) dans le deuxième circuit (82) destiné à être actionné par le premier piston (38) entre une position fermant le deuxième circuit (82) et une position ouvrant ce dernier en fonction de la pression dans la première chambre (42) caractérisé en ce que la première chambre (42) est délimitée par un deuxième piston (22) qui est sollicité par un ressort (34) dans une direction tendant à réduire le volume de la première chambre (42).

2. Dispositif selon la revendication 1, caractérisé en ce que le premier piston (38) comporte un moyen de clapet anti-retour (40) permettant au fluide de passer du dispositif d'assistance hydraulique (12) vers la chambre (42).

3. Dispositif selon la revendication 2, caractérisé en ce que le deuxième piston (22) délimité une deuxième chambre (30) en communication avec le premier circuit hydraulique (66, 68), le deuxième piston (22) comportant un moyen de clapet anti-retour (26) permettant au fluide de passer de la première chambre (42) à la deuxième chambre (30).

## Patentansprüche

1. Druckspeicher (16) für Hydraulikkreis mit einer Druckmittelquelle (10), einer Hydraulik-Hilfsvorrichtung (12), die dazu bestimmt ist, selektiv betätigt zu werden, um Druckmittel von der Quelle (10) über einen ersten Hydraulikkreis (66, 74) zu einem Hydraulik-Empfangsbehälter (70, 72) zu schicken, einem Bremsregelsystem und einem ersten Ventilmittel (50, 110), das ein Magnetventil enthalten kann und dazu bestimmt ist, den Durchfluß des Druckmittels zwischen Quelle (10) und Empfangsbehälter (70, 72) zu unterbrechen, wobei der Druckspeicher (16) in einem zweiten Hydraulikkreis (82) zwischen der Hochdruckquelle (10) und dem Hydraulik-Empfangsbehälter (70, 72) angeordnet ist und eine erste Kammer (42) umfaßt, die von einem ersten Kolben (38) begrenzt wird und dazu bestimmt ist, mit der Hydraulik-Hilfsvorrichtung (12) bei deren Inbetriebnahme in Verbindung gesetzt zu werden, und einem zweiten im zweiten Hydraulikkreis (82) befindlichen Ventilmittel (46, 48), das dazu bestimmt ist, vom ersten Kolben (38) betätigt zu werden, zwischen einer Stellung, die den zweiten Kreis (82) schließt und einer Stellung, die letzteren abhängig vom Druck in der ersten Kammer (42) öffnet, dadurch gekennzeichnet, daß die erste Kammer (42) von einem zweiten Kolben (22) begrenzt wird, der von einer Feder (34) in einer Richtung belastet ist, die dazu neigt, das Volumen der ersten Kammer (42) zu reduzieren.

2. Vorrichtung nach Anspruch 1, dadurch gekennzeichnet, daß der erste Kolben (38) ein Rückschlagventil (40) umfaßt, das dem Druckmittel ermöglicht, von der Hydraulik-Hilfsvorrichtung (12) zur Kammer (42) zu fließen.

3. Vorrichtung nach Anspruch 2, dadurch gekennzeichnet, daß der zweite Kolben (22) eine zweite, mit dem ersten Hydraulikkreis (66, 68) in Verbindung stehende Kammer (30) begrenzt, wobei der zweite Kolben (22) ein Rückschlagventil (26) enthält, das dem Druckmittel ermöglicht, von der ersten Kammer (42) zur zweiten Kammer (30) zu fließen.

## Claims

1. Pressure-memorizing device (16) for a hydraulic circuit comprising a source of fluid under pressure (10), a hydraulic servo device (12) intended to be selectively operated to send fluid from the source (10), via a first hydraulic circuit (66, 74) towards a hydraulic receiver (70, 72), a braking control system, and a first valve means (50, 110) which may comprise a relay and is intended to interrupt the flow of fluid between the source (10) and the receiver (70, 72), the pressure-memorizing device (16) being arranged in a second circuit (82) between the high pressure source (10) and the hydraulic receiver (70, 72) and comprising a first chamber (42) determined by a first plunger (38) and intended to be placed in communication with the hydraulic servo device (12), when it is brought into action, and a second valve means (46, 48) in the second circuit (82) intended to be operated by the first plunger (38) between a position which closes the second circuit (82) and a position which opens the latter as a function of the pressure in the first chamber (42), characterized in that the first chamber (42) is determined by a second plunger (22) which is pushed by a spring (34) in a direction which tends to reduce the volume of the first chamber (42).

2. Device according to Claim 1, characterized in that the first plunger (38) comprises a nonreturn flap valve means (40) allowing the fluid to flow from the hydraulic servo device (12) towards the chamber (42).

3. Device according to Claim 2, characterized in that the second plunger (22) determines a second chamber (30) in communication with the first hydraulic circuit (66, 68), the second plunger (22) comprising a nonreturn flap valve means (26) allowing the fluid to flow from the first chamber (42) to the second chamber (30).

## FIG_1

FIG. 2

FIG_3

EP 0 252 789 B1